# EUROPEAN PATENT APPLICATION

(11) **EP 4 753 108 A1**
(43) Date of publication of application: **03.06.2026**
(21) Application number: 24845264.1
(22) Date of filing: 20.06.2024
(51) Int. Cl.: H02J 50/40, H02J 50/20, H02J 50/80

(54) **WIRELESS POWER SUPPLY SYSTEM**

(30) Priority: 26.07.2023 JP 2023122040
(71) Applicant: Aeterlink Corp., Tokyo 100-0005 (JP)
(72) Inventor: MURAI, Akito, Tokyo 100-0005 (JP); KODATE, Naoto, Tokyo 100-0005 (JP)
(74) Representative: Zimmermann & Partner Patentanwälte mbB
(86) International application number: PCT/JP2024/022328
(87) International publication number: WO 2025/022882

(57) **Abstract**

Provided is a wireless power supply system comprising a first transmitter, a second transmitter, and at least one receiver, wherein: the first transmitter and the second transmitter can wirelessly supply electric power to the receiver via power supply radio waves; the center frequency of power supply radio waves of the first transmitter differs from the center frequency of power supply radio waves of the second transmitter; and the power supply radio waves of the first transmitter and the second transmitter are wireless radio waves which can be regarded as substantially uninterrupted continuous waves.

## Description

### TECHNICAL FIELD

The present disclosure relates to a wireless power supply system.

### BACKGROUND ART

A technique for wirelessly transmitting power is known.

Patent Literature 1 discloses a technique for providing an electronic apparatus and a power supply method that realize efficient power supply to a terminal.

### CITATION LIST

### PATENT LITERATURE

Patent Literature 1: JP2019-154195A

### SUMMARY OF INVENTION

### TECHNICAL PROBLEM

In a wireless power supply system, there is a problem that a receiver cannot stably receive power supplied from a plurality of transmitters in some cases.

Therefore, the present disclosure has been made to solve the above problem, and an object thereof is to provide a technique that enables a receiver to stably receive power supplied from a plurality of transmitters.

### SOLUTION TO PROBLEM

A wireless power supply system includes a first transmitter, a second transmitter, and at least one receiver, in which the first transmitter and the second transmitter are configured to wirelessly supply power to the receiver via power supply radio waves, a center frequency of a power supply radio wave of the first transmitter is different from a center frequency of a power supply radio wave of the second transmitter, and the power supply radio waves of the first transmitter and the second transmitter are radio waves regarded as substantially consecutive continuous waves.

### ADVANTAGEOUS EFFECTS OF INVENTION

According to the present disclosure, it is possible to provide a technique that enables a receiver to stably receive power supplied from a plurality of transmitters in a wireless power supply system.

### BRIEF DESCRIPTION OF DRAWINGS

[FIG. 1] FIG. 1 shows an overall configuration of a WPT system 1 according to the present embodiment.
[FIG. 2] FIG. 2 is a block diagram showing an example of a configuration of a first transmitter 100, a second transmitter 110, and a receiver 200.
[FIG. 3] FIG. 3 is a block diagram showing a functional configuration of a control device C10.

### DESCRIPTION OF EMBODIMENTS

Hereinafter, embodiments of the present disclosure will be described with reference to the drawings. In all the drawings showing the embodiments, the same reference signs are assigned to common components, and repeated explanations are omitted. Note that the following embodiments are not intended to unduly limit the contents of the present disclosure recited in the claims. Additionally, not all components shown in the embodiments are necessarily essential components of the present disclosure. Furthermore, each drawing is a schematic diagram and is not necessarily shown with strict accuracy.

### <1 Overall System Configuration Diagram>

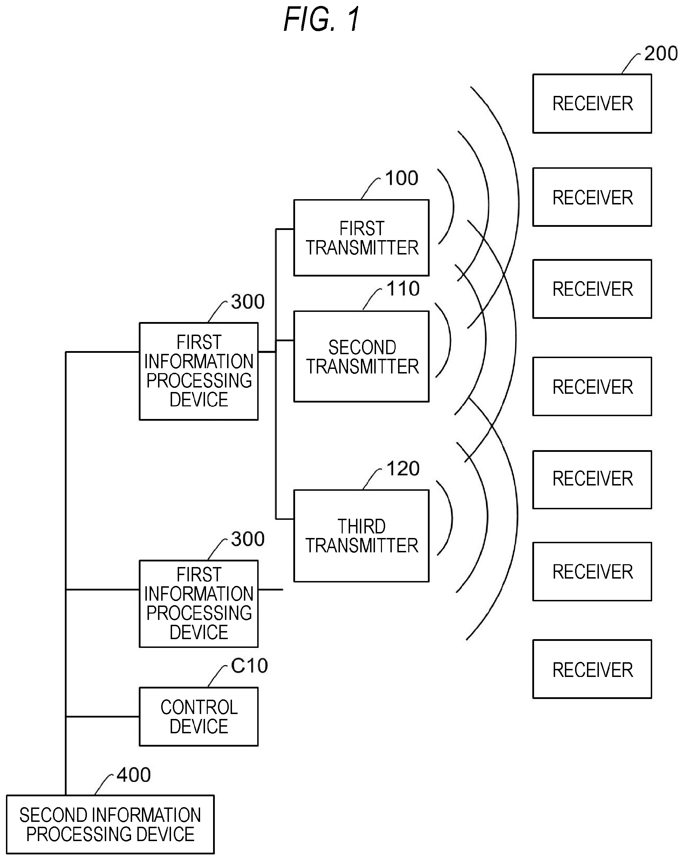

FIG. 1 shows an overall configuration of a WPT system 1 according to the present embodiment.

The WPT system 1 shown in FIG. 1 includes, for example, a first transmitter 100, a second transmitter 110, a receiver 200, a first information processing device 300, and a second information processing device 400. The WPT system 1 shown in FIG. 1 is used, for example, in a building, a factory, or the like. The connection between the first transmitter 100, the second transmitter 110, and the first information processing device 300, and the connection between the first information processing device 300 and the second information processing device 400 may be wired or wireless.

In FIG. 1, an example is shown in which the WPT system 1 includes three transmitters (the first transmitter 100, the second transmitter 110, and a third transmitter 120). However, the number of transmitters included in the WPT system 1 is not limited to three. The number of transmitters included in the WPT system 1 may be 2 or less, or 4 or more.

In FIG. 1, an example is shown in which the WPT system 1 includes seven receivers 200. However, the number of receivers 200 included in the WPT system 1 is not limited to seven. The number of receivers 200 included in the WPT system 1 may be 6 or less, or 8 or more.

The first transmitter 100 and the second transmitter 110 is configured to wirelessly supply power to a plurality of receivers 200 via power supply radio waves.

The first transmitter 100 and the second transmitter 110 is configured to perform wireless information communication with the plurality of receivers 200 via communication radio waves.

The power supply radio waves of the first transmitter 100 and the second transmitter 110 may be wireless radio waves regarded as substantially consecutive continuous waves.

Each of power supply signals transmitted from the first transmitter 100 and the second transmitter 110 is preferably a radio frequency signal having predetermined power, and is preferably a radio frequency signal regarded as a substantially consecutive continuous wave, by providing the radio frequency signal with a break period of any cycle that is a short period compared to a period other than the break period.

Specifically, the power supply signals (power supply radio waves) transmitted from the first transmitter 100 and the second transmitter 110 may be, for example, continuous waves (CW) having predetermined power. A frequency band of the power supply signal is, for example, a 920 MHz band in consideration of a distance between the receiver 200 and each of the first transmitter 100 and the second transmitter 110. When the frequency band is higher than the illustrated frequency band, there is a possibility that the predetermined power that allows the receiver 200 to operate cannot be supplied unless the distance between the receiver 200 and each of the first transmitter 100 and the second transmitter 110 is shortened. Accordingly, an appropriate frequency band can be determined by considering a practical range (considering that the distance between the receiver 200 and each of the first transmitter 100 and the second transmitter 110 is several meters as an example).

In the present disclosure, the frequencies of the radio waves transmitted by the first transmitter 100 and the second transmitter 110 are different from each other around the 920 MHz band.

In this case, a law or the like of a country where the WPT system 1 is installed may impose a limitation that the power supply signal having predetermined power is intermittently transmitted. As an example, when the power supply signals from the first transmitter 100 and the second transmitter 110 correspond to a regulation of a radio station defined in Japanese Radio Law (with or without a license), a predetermined break period may be required to be provided for the power supply signals based on Radio Law. In this case, the power supply signals cannot be said as continuous waves when considered on a certain time axis. However, it is important to provide a break period, and the break period may be very short. Accordingly, the power supply signals transmitted from the first transmitter 100 and the second transmitter 110 can be regarded as substantially consecutive continuous waves. A ratio of a duration of the power supply signal to a duration of the break period may be such that the power supply signals transmitted from the first transmitter 100 and the second transmitter 110 can be regarded as substantially consecutive continuous waves as described above, and as an example, the duration of the break period is about 1/50 to 1/100 of the duration of the power supply signal.

The power supply radio waves of the first transmitter 100 and the second transmitter 110 are preferably unmodulated, contain no modulation signals, and carry no information.

Specifically, there is a radio emission type representing characteristics of radio waves generally used in a communication system. The radio emission type is expressed by a character string of three characters obtained by combining alphabets or numerical values indicating a type of modulation of a main carrier, a property of a signal modulating the main carrier, and a type of transmitted information.

The type of modulation of the main carrier includes any one of unmodulated carrier: N, amplitude modulation (double sideband): A, amplitude modulation (single-sideband with full carrier): H, amplitude modulation (single-sideband with reduced carrier): R, amplitude modulation (single-sideband with suppressed carrier): J, amplitude modulation (independent sideband): B, amplitude modulation (independent sideband): C, angle modulation (frequency modulation): F, angle modulation (phase modulation): G, and emission in which the main carrier is amplitude and angle-modulated either simultaneously or in a pre-established sequence: D.

The property of the signal modulating the main carrier is any one of no modulating signal: 0, one channel carrying digital signals, no subcarrier: 1, one channel carrying digital signals, using a subcarrier: 2, one channel carrying analog signals: 3, two or more channels carrying digital signals: 7, two or more channels carrying analog signals: 8, and composite system with one or more channels carrying digital signals, together with one or more channels carrying analog signals: 9.

The type of transmitted information includes any one of no information: N, telegraphy (for aural reception): A, telegraph (for automatic reception): B, facsimile: C, data transmission, telemetry, tele-command: D, telephony (including sound broadcasting): E, television (video): F, and combination of the above: W.

In the present disclosure, the radio emission type of the power supply radio waves of the first transmitter 100 and the second transmitter 110 is N0N, that is, unmodulated carrier: N, one channel carrying digital signals, no subcarrier: 0, and no information: N. In this case, the power supply radio wave indicates that the main carrier is unmodulated (unmodulated carrier), there is no digital signal (one channel carrying digital signals, no subcarrier), and there is no transmitted information (no information).

Accordingly, since the power supply radio wave is unmodulated, interference with other surrounding communication systems is reduced, enabling stable energy transmission. Additionally, since the power supply radio wave is unmodulated, transmission energy is concentrated on the carrier. Accordingly, energy can be efficiently transmitted between the transmitter and the receiver. Since information is not transmitted, the system is simple, and the design and implementation of the transmitter and the receiver can be simplified.

In this specification, the first transmitter 100 and the second transmitter 110 are the first (power) transmitter 100 and the second (power) transmitter 110 in the sense of wirelessly transmitting power, and similarly, the receiver 200 is the (power) receiver 200 in the sense of wirelessly receiving power. As will be described later, the receiver 200 may be configured to transmit, for example, information on a state of the receiver 200 or information on a measurement result by a sensor to the first transmitter 100 and the second transmitter 110 as a data signal (a communication radio wave), and the first transmitter 100 and the second transmitter 110 may receive the data signal. In this case, the first transmitter 100 and the second transmitter 110 are receivers that receive the data signal, and the receiver 200 functions as a transmitter that transmits the data signal.

In FIG. 1, an example is shown in which the WPT system 1 includes two first information processing devices 300. However, the number of first information processing devices 300 included in the WPT system 1 is not limited to two. The number of first information processing devices 300 included in the WPT system 1 may be one, or 3 or more.

Hereinafter, a relation between the first transmitter 100 and the receiver 200, the first information processing device 300, the second information processing device 400, and the like will be described. Since the second transmitter 110 is similar to the first transmitter 100, the detailed description thereof will be omitted.

The first transmitter 100 is configured to transmit, for example, a power supply signal or a data signal to the receiver 200. The first transmitter 100 is configured to transmit the power supply signal to the receiver 200 using radio waves in the 920 MHz band, for example. The first transmitter 100 is configured to transmit the data signal to the receiver 200 using radio waves in a 2.4 GHz band, for example. The first transmitter 100 may be configured to transmit the data signal using radio waves in the 920 MHz band.

The first transmitter 100 may be configured to supply power to one receiver 200, or may be configured to supply power to a plurality of receivers 200, for example. The first transmitter 100 may be configured to transmit the data signal to one receiver 200, or may be configured to transmit the data signal to a plurality of receivers 200, for example. The first transmitter 100 may be configured to transmit the same data signal as that of another first transmitter 100, or may be configured to transmit a different data signal from that of another first transmitter 100, for example. The first transmitter 100 may be configured to transmit a predetermined command signal to the receiver 200 as the data signal, or may be configured to transmit a preset signal to the receiver 200 as the data signal, for example.

The first transmitter 100 is configured to receive, for example, a data signal transmitted from the receiver 200. The first transmitter 100 may be configured to receive a data signal transmitted from one receiver 200, or may be configured to receive data signals transmitted from a plurality of receivers 200, for example. The first transmitter 100 is configured to transmit the data signal transmitted from the receiver 200 to the first information processing device 300. The first transmitter 100 is configured to transmit information on a state of the first transmitter 100 to the first information processing device 300.

The receiver 200 is configured to receive, for example, the power supply signal or data signal transmitted from the first transmitter 100. For example, in a case where the receiver 200 includes a power storage unit, the receiver 200 is configured to convert the power supply signal transmitted from the first transmitter 100 into power and store the converted power in the power storage unit. In a case where the receiver 200 includes, for example, a predetermined sensor, the receiver 200 is configured to convert the power supply signal transmitted from the first transmitter 100 into power and drive the sensor with the converted power.

The receiver 200 is configured to transmit, for example, information on a state of the receiver 200 or information on a measurement result by the sensor, to the first transmitter 100 as the data signal.

The first information processing device 300 is an information processing device configured to monitor the operations of the first transmitter 100 and the receiver 200 accommodated in the WPT system 1. For example, the first information processing device 300 is configured to determine whether the first transmitter 100 or the receiver 200 is in a preset state, based on the information on the states of the first transmitter 100 and the receiver 200 transmitted from the first transmitter 100. In a case where it is determined that the first transmitter 100 or the receiver 200 is in the preset state, the first information processing device 300 is configured to transmit predetermined information to the second information processing device 400.

Additionally, the first information processing device 300 is configured to accumulate information on the first transmitter 100 and the receiver 200 accommodated in the WPT system 1. For example, the first information processing device 300 is configured to store, in a storage unit provided in the first information processing device 300, the information on the states of the first transmitter 100 and the receiver 200, the information being transmitted from the first transmitter 100.

Additionally, the first information processing device 300 is configured to control the operation of the first transmitter 100 accommodated in the WPT system 1. For example, the first information processing device 300 is configured to transmit a predetermined instruction or information to the first transmitter 100.

Additionally, the first information processing device 300 is configured to control the operation of the second information processing device 400.

The second information processing device 400 is, for example, an information processing device that is operated by an administrator of the WPT system 1. In a case where the second information processing device 400 receives, from the first information processing device 300, a notification to the effect that the first transmitter 100, the receiver 200, or both accommodated in the WPT system 1 are in a predetermined state, the second information processing device 400 presents, to a user, information indicating that the first transmitter 100, the receiver 200, or both are in the predetermined state.

Additionally, the second information processing device 400 is configured to analyze the information on the states of the first transmitter 100 and the receiver 200 stored in the first information processing device 300, and present predetermined information to the user. The predetermined information includes, for example, the following:
· Information on the placement of the first transmitter 100
· Information on the placement of the receiver 200
· Information on power consumption
· Information on electric energy

### <Configurations of Transmitter and Receiver>

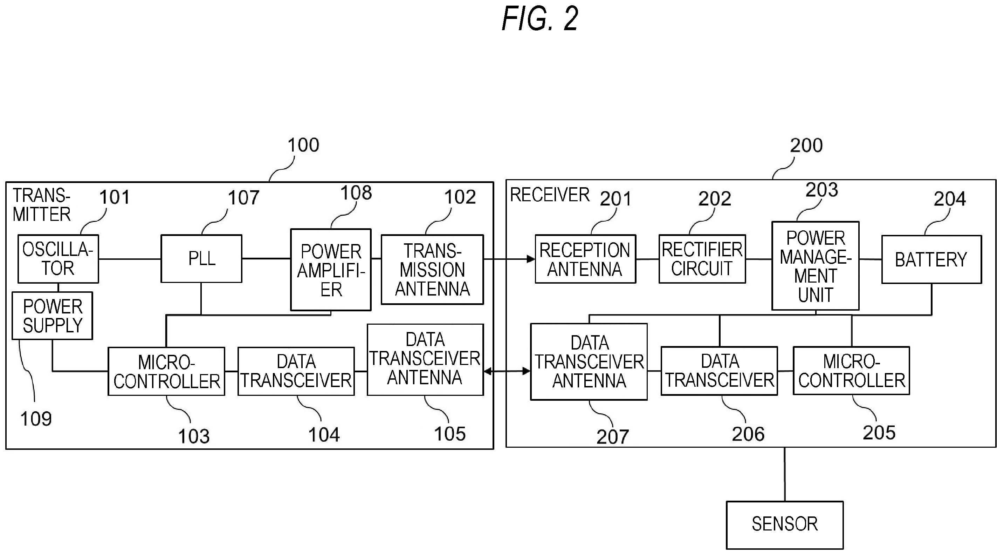

FIG. 2 is a block diagram showing an example of a configuration of the first transmitter 100 and the receiver 200 shown in FIG. 1. As shown in FIG. 2, the first transmitter 100 and the receiver 200 are spaced apart from each other by, for example, a predetermined interval. For example, the first transmitter 100 and the receiver 200 are installed spaced apart from each other by a distance of several meters. Specifically, for example, the first transmitter 100 is fixedly installed at an elevated position indoors, such as on the ceiling or at a predetermined high position provided on a wall. The receiver 200 is installed on a predetermined device indoors or placed near a device requiring power supply. Additionally, the receiver 200 may be carried by the user. The first transmitter 100 is configured to transmit the power supply signal to the receiver 200 by radio waves in the 920 MHz band, for example. The receiver 200 is configured to convert the power supply signal transmitted from the first transmitter 100 into power, and use the converted power for charging or supply the converted power to a predetermined device.

The first transmitter 100 includes, for example, an oscillator 101, a transmission antenna 102, a microcomputer (controller) 103, a data transceiver 104, a data transceiver antenna 105, a capacitor, a PLL 107, a power amplifier 108, and a power supply 109. The oscillator 101, the microcomputer 103, the data transceiver 104, the data transceiver antenna 105, the capacitor, the PLL 107, the power amplifier 108, and the power supply 109, or at least a combination of these may be mounted on, for example, a printed circuit board (PCB).

The oscillator 101 is configured to oscillate a signal in a predetermined frequency band, for example, in the 920 MHz band. The oscillated signal may be amplified, if necessary, to remove unnecessary frequency components.

The transmission antenna 102 is configured to efficiently transmit, for example, radio waves in the 920 MHz band. The transmission antenna 102 is configured to radiate a signal oscillated by the oscillator 101 as a power supply signal.

The microcomputer 103 is configured to control the operation of the first transmitter 100. The microcomputer 103 is implemented by, for example, a semiconductor element equipped with an ARM processor. The microcomputer 103 is configured to control, for example, the transmission of radio waves by the transmission antenna 102. The microcomputer 103 is configured to control the current and voltage of the power supplied to the power amplifier 108 to control the transmission intensity of the radio waves transmitted by the transmission antenna 102.

The data transceiver 104 is configured to perform processing such as digital-to-analog conversion and modulation of analog data. Additionally, the data transceiver 104 is configured to perform processing such as demodulation of a data signal received by the data transceiver antenna 105 and digitization of the demodulated data. For example, the data transceiver 104 is configured to extract a predetermined signal from the data signal received by the data transceiver antenna 105, convert the signal into digital data, and transmit the digital data to the microcomputer 103.

The data transceiver antenna 105 is configured to efficiently transmit and receive radio waves in the 2.4 GHz band, for example. The data transceiver antenna 105 is configured to radiate a data signal supplied from the data transceiver 104. Additionally, the data transceiver antenna 105 is configured to receive a data signal transmitted from the receiver 200.

The capacitor is provided between the PLL 107, the power supply 109, and GND (ground, 0 V), and serves as a bypass capacitor for generating a high-quality signal.

Note that the capacitor may be a capacitor that is connected to the PLL 107, configured to generate a high-quality signal, and configured to serve as a low-pass filter for removing unnecessary high-frequency components. The low-pass filter includes a resistor and a capacitor, and has a function of allowing high-frequency components to flow through the capacitor and allowing low-frequency components to pass. By providing the low-pass filter between the oscillator 101 and the PLL 107, unnecessary high-frequency components can be removed, and the quality of the output signal can be improved.

The PLL 107 is an electronic circuit called a phase-locked loop for controlling a frequency and a phase. The capacitor is connected to the PLL, and the frequency of the radio wave transmitted by the transmission antenna 102 varies according to the capacitance of the capacitor. In the present disclosure, the capacitor is provided between the oscillator 101 and the PLL 107.

The power amplifier 108 is an electronic circuit configured to amplify a signal output from the PLL 107 based on power from the microcomputer 103 and output the amplified signal to the transmission antenna 102.

The power supply 109 is a power supply configured to supply power to the oscillator 101 and the microcomputer 103.

The receiver 200 includes, for example, a reception antenna 201, a rectifier 202, a power management unit 203, a power storage unit 204, a microcomputer 205, a data transceiver 206, and a data transceiver antenna 207. The reception antenna 201, the rectifier 202, the power management unit 203, the power storage unit 204, the microcomputer 205, the data transceiver 206, the data transceiver antenna 207, or at least a combination of these may be mounted on, for example, a PCB or an FPC (flexible circuit board).

The reception antenna 201 is configured to efficiently receive, for example, radio waves in the 920 MHz band. The reception antenna 201 is configured to receive a power supply signal radiated from the transmission antenna 102.

The rectifier 202 is configured to rectify the radio waves received as a power supply signal and convert the same into a direct current voltage.

The power management unit 203 is configured to manage a direct current voltage. For example, the power management unit 203 is configured to control a charging voltage based on the direct current voltage. The power management unit 203 is configured to control the charging voltage to charge the power storage unit 204. Additionally, for example, in a case where power of a predetermined capacity or more is stored in the power storage unit 204, the power management unit 203 supplies the direct current voltage to a connected member.

Additionally, the power management unit 203 is configured to discharge the power stored in the power storage unit 204 according to the control of the microcomputer 205.

The power storage unit 204 is configured to store power, according to an instruction from the power management unit 203. The power storage unit 204 is implemented by, for example, a battery or a capacitor. Additionally, the power storage unit 204 is configured to discharge the stored power, according to the instruction from the power management unit 203.

The microcomputer 205 is configured to control the operation of the receiver 200. The microcomputer 205 is driven by the direct current voltage supplied from the power management unit 203 or the power stored in the power storage unit 204. The microcomputer 205 is configured to control the power management unit 203 to discharge the power stored in the power storage unit 204.

The receiver 200 may be connected to, for example, various sensors. For example, a heat sensor, a temperature sensor, a light sensor, a humidity sensor, a vibration sensor, and the like are connected to the receiver 200. The sensors connected to the receiver 200 are driven by, for example, the direct current voltage supplied from the power management unit 203 or the power discharged from the power storage unit 204. The microcomputer 205 is configured to continuously or intermittently monitor a voltage value at a predetermined portion of the receiver 200, a status of a sensor connected to the receiver 200, information detected by the sensor, and the like. The microcomputer 205 is configured to transmit, to the data transceiver 206, as digital data, the voltage value at the predetermined portion of the receiver 200, the status of the sensor connected to the receiver 200, the information detected by the sensor, and the like. Note that the sensor may be built in the receiver 200.

The data transceiver 206 is configured to perform processing such as conversion of digital data supplied from the microcomputer 205 into analog data and modulation of analog data. Additionally, the data transceiver 206 is configured to perform processing such as demodulation of a data signal received by the data transceiver antenna 207 and digitization of the demodulated data. The data transceiver 206 is driven by, for example, the direct current voltage supplied from the power management unit 203, or power discharged from the power storage unit 204.

The data transceiver antenna 207 is configured to efficiently transmit and receive, for example, radio waves in the 2.4 GHz band. The data transceiver antenna 207 is configured to radiate a data signal supplied from the data transceiver 206. Additionally, the data transceiver antenna 207 is configured to receive a data signal transmitted from the first transmitter 100. For example, the data transceiver antenna 207 is driven by the direct current voltage supplied from the power management unit 203 or the power discharged from the power storage unit 204.

### <Configuration of Control Device C10>

The control device C10 is an information processing device including a storage unit C101 and a control unit C104.

In the present disclosure, the control device C10 is disclosed as an information processing device different from the first information processing device 300 and the second information processing device 400, but the first information processing device 300 or the second information processing device 400 may have the function of the control device C 10. That is, the control device C10 may be the first information processing device 300 or the second information processing device 400.

Additionally, the function of the control device C10 may be included in at least one of the plurality of first transmitters 100 and may be realized as part of the function of the first transmitter 100. That is, the processing that the control device C10 can execute may be executed by the first transmitter 100. That is, the first transmitter 100 may include part of hardware and software configurations of the control device C10.

For example, any one of the plurality of first transmitters 100 may serve as a parent device (host) of another first transmitter 100, perform the function of the control device C10, and execute various processing. That is, the first transmitter 100 related to the parent device includes part of hardware and software configurations to function as the control device C10.

Note that all the first transmitters 100 may be configured to include part of hardware and software configurations to function as the control device C10. In this case, a selected predetermined first transmitter 100 may serve as a parent device and perform the function of the control device C10. The parent device may be selected through an input operation of the user.

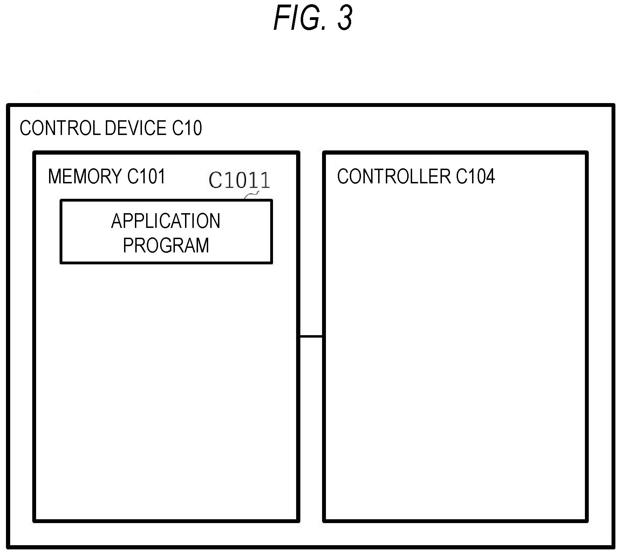

FIG. 3 is a block diagram showing a functional configuration of the control device C10.

### <Configuration of Storage Unit C101 of Control Device C10>

The storage unit C101 of the control device C10 includes an application program C1011.

The application program C1011 is a program for causing the control unit C104 of the control device C10 to function as each functional unit.

The application program C1011 includes an application such as a web browser application.

### <Configuration of Control Unit C104 of Control Device C10>

The control unit C104 of the control device C10 realizes each functional unit by executing the application program C 1011 stored in the storage unit C101.

The control device C10 is configured to control the plurality of transmitters via a wired connection.

Specifically, the control device C10 may be connected by wire to the plurality of first transmitters 100 based on any wired connection standard such as Ethernet, Universal Serial Bus (USB), or a serial connection. The control unit C104 of the control device C10 is configured to control transmission of a power supply signal and transmission and reception of a data signal of the first transmitter 100, by transmitting a control signal to the first transmitter 100 via a wired connection.

The control device C10 is configured to control the plurality of transmitters via a wireless connection.

Specifically, the control device C10 may be connected wirelessly to the plurality of first transmitters 100 based on any wireless connection standard such as WiFi, Bluetooth (registered trademark), Near Field Communication (NFC), Zigbee (registered trademark), Z-Wave, or LTE. The control unit C104 of the control device C10 is configured to control transmission of a power supply signal and transmission and reception of a data signal of the first transmitter 100, by transmitting a control signal to the first transmitter 100 via a wireless connection.

### <Operation of WPT System 1>

Features of the WPT system 1 according to the present disclosure will be described below.

A center frequency of the power supply radio wave of the first transmitter 100 is different from a center frequency of the power supply radio wave of the second transmitter 110.

Specifically, the center frequency refers to a frequency located at the center of a frequency band in a frequency range of power supply radio waves transmitted by the first transmitter 100 and the second transmitter 110. Note that in the present disclosure, the power supply radio waves transmitted by the first transmitter 100 and the second transmitter 110 shall be radio waves of identical channel (substantially the same frequency) defined in Radio Law. A predetermined reference frequency is assigned to each predetermined channel, and radio waves with frequencies included in a range of ± 20 ppm (Parts Per Million) with respect to the reference frequency (the center frequency) are usually radio waves of the identical channel. For example, when a reference frequency of a predetermined channel is f, a plurality of radio waves with frequencies included in a range of f × (1 ± 20/1,000,000) [Hz] are radio waves of identical channel.

Note that in the present disclosure, the definition of the same channel based on Japanese Radio Law has been described as an example, but the present disclosure is not limited thereto. Specifically, the range of the same channel may be defined based on the laws and regulations of the implementing country or industry practices.

For example, any center frequency may be selected within the range of 902 MHz to 928 MHz in countries of the Americas, and within the range of 865.0 MHz to 865.6 MHz in European countries. For example, the center frequency of the first transmitter may be 902 MHz, and the center frequency of the second transmitter may be 928 MHz.

Additionally, the same may be applied to 24 GHz (millimeter wave) or the like.

In the present disclosure, the power supply radio waves transmitted by the first transmitter 100 and the second transmitter 110 are unmodulated, contain no modulation signals, and carry no information (the radio emission type N0N). In such a case, the center frequency is the frequency of the power supply radio wave.

The power supply radio waves transmitted by the first transmitter 100 and the second transmitter 110 in the present disclosure are of the radio emission type N0N. A radio wave having the radio emission type N0N is known as an unmodulated continuous wave (CW) and should have a single frequency in theory, but it is difficult to maintain a completely constant frequency in an actual transmitter. For example, a change in an outside air temperature in an environment in which the transmitter is installed affects the characteristics of the components (particularly, the oscillator) of the transmitter, and also affects the frequency of the power supply radio wave transmitted by the transmitter. Additionally, electronic components such as an oscillator, a capacitor, and a resistor included in the transmitter have subtle individual differences in the manufacturing process, and may affect the transmission frequency. Noise from a power supply that supplies power to the transmitter and instability of the power supply also affect the frequency of the transmitter.

A case where the center frequency in the present disclosure is an average value of a minimum value and a maximum value of power supply radio waves transmitted over a predetermined period in a predetermined installation environment in which the first transmitter 100 and the second transmitter 110 are installed will be described as an example.

In a case where the center frequency of the power supply radio wave of the second transmitter 110 is f2 [Hz], a center frequency f1 [Hz] of the power supply radio wave of the first transmitter 100 is f2 × (1 + 100/1,000,000) [Hz] or less and f2 × (1 - 100/1,000,000) [Hz] or more. In a case where the center frequency of the power supply radio wave of the second transmitter 110 is f2 [Hz], the center frequency f1 [Hz] of the power supply radio wave of the first transmitter 100 is f2 × (1 + 1/1,000,000) [Hz] or more and f2 × (1 - 1/1,000,000) [Hz] or less.

In a case where the center frequency of the power supply radio wave of the second transmitter 110 is f2 [Hz], the center frequency f1 [Hz] of the power supply radio wave of the first transmitter 100 is preferably in a range of f2 × (1 + 1/1,000,000) [Hz] or more and f2 × (1 + 100/1,000,000) [Hz] or less, and the center frequency f1 of the first transmitter 100 and the center frequency f2 of the second transmitter 110 are preferably different from each other.

In a case where the center frequency of the power supply radio wave of the second transmitter 110 is f2 [Hz], the center frequency f1 [Hz] of the power supply radio wave of the first transmitter 100 is in a range of f2 × (1 - 1/1,000,000) [Hz] or less and f2 × (1 - 100/1,000,000) [Hz] or more, and the center frequency f1 of the first transmitter 100 and the center frequency f2 of the second transmitter 110 are preferably different from each other.

Specifically, the power supply radio waves transmitted by the first transmitter 100 and the second transmitter 110 are preferably different within a range (± 20 ppm, Parts Per Million) defined in Radio Law based on a reference frequency fc defined in Radio Law for each predetermined channel.

In a case where the center frequency of the power supply radio wave of the second transmitter 110 is f2 [Hz], the center frequency f1 [Hz] of the power supply radio wave of the first transmitter 100 is preferably in a range of f2 × (1 + 20/1,000,000) [Hz] or less and f2 × (1 - 20/1,000,000) [Hz] or more.

In a case where the center frequency of the power supply radio wave of the second transmitter 110 is f2 [Hz], a center frequency f1 [Hz] of the power supply radio wave of the first transmitter 100 is f2 × (1 + 1,000/1,000,000) [Hz] or less and f2 × (1 - 1,000/1,000,000) [Hz] or more.

In a case where the center frequency of the power supply radio wave of the first transmitter 100 is 920 MHz, the center frequency of the power supply radio wave of the second transmitter 110 is preferably around 920 MHz ± 9.2 kHz. Specifically, the center frequency of the power supply radio wave of the second transmitter 110 is preferably different from the center frequency of the power supply radio wave of the first transmitter 100 by about 920 MHz × (10/1,000,000) [Hz] = 9.2 kHz.

As the two waves with different frequencies overlap, the amplitude (received power) fluctuates at 9.2 kHz. The fluctuation means that both an increase in power and a decrease in power occur over time. It can be said that the shorter the fluctuation period between the increase in power and the decrease in power, the more temporally robust the behavior. In a case where the center frequency f1 of the power supply radio wave of the first transmitter 100 and the center frequency f2 of the power supply radio wave of the second transmitter 110 are different from each other by about 9.2 kHz, the temporal fluctuation in the supply power is about 1/9.2 kHz = 100 µs. In particular, in a case where applied to wireless power supply in a sensor or the like used for a factory automation (FA) device, a beacon, or the like, such the temporal fluctuation in the supply power does not affect the operation of a power supply device, and thus is preferable.

In a case where the center frequency of the power supply radio wave of the second transmitter 110 is f2 [Hz], the center frequency f1 [Hz] of the power supply radio wave of the first transmitter 100 is preferably f2 × (1 + 0.001/1,000,000) [Hz] or more or f2 × (1 - 0. 001/1,000,000) [Hz] or less.

Specifically, in a case where the center frequency of the power supply radio wave of the first transmitter 100 is 920 MHz, the center frequency of the power supply radio wave of the second transmitter 110 is preferably around 920 MHz ± 9.2 Hz. Specifically, the center frequency of the power supply radio wave of the second transmitter 110 is preferably different from the center frequency of the power supply radio wave of the first transmitter 100 by about 920 MHz × (0.001/1,000,000) [Hz] = 9.2 Hz.

As the two waves with different frequencies overlap, the amplitude (received power) fluctuates at 9.2 Hz. The fluctuation means that both an increase in power and a decrease in power occur over time. It can be said that the shorter the fluctuation period between the increase in power and the decrease in power, the more temporally robust the behavior. In a case where the center frequency f1 of the power supply radio wave of the first transmitter 100 and the center frequency f2 of the power supply radio wave of the second transmitter 110 are different from each other by about 9.2 Hz, the temporal fluctuation in the supply power is about 1/9.2 Hz = 10 milliseconds. In particular, in an environment sensor that is a device for detecting, measuring, and monitoring environmental conditions (temperature, humidity, atmospheric pressure, illumination conditions, acoustic conditions, radiation level, vibration, wind speed and wind direction, other types of environmental elements, and the like) of an installation environment, since a large amount of power is stored, such the temporal fluctuation in the supply power does not affect the operation of the power supply device, and thus is preferable.

The center frequency of the power supply radio wave of the first transmitter 100 and the center frequency of the power supply radio wave of the second transmitter 110 may be different based on the following conditions.
· The capacitors connected to output terminals of the first transmitter 100 and the second transmitter 110 have different capacitances. Here, the capacitor is a capacitor included in a low-pass filter that is connected to the PLL 107 and is used to reduce the influence of power supply noise on a radio signal to be transmitted. The capacitor is included at least in the first transmitter 100 or the second transmitter 110.
· The component characteristics of the first transmitter 100 and the second transmitter 110 are different due to a difference in the outside air temperature of the installation environment of the first transmitter 100 and the second transmitter 110. Additionally, the temperature characteristics of the first transmitter 100 and the second transmitter 110 may vary due to a difference in the components of the first transmitter 100 and the second transmitter 110.
· The power supply voltages or power supply currents supplied to the first transmitter 100 and the second transmitter 110 are different. Specifically, the microcomputer 103 is configured to control the voltage and current of the power supplied to the PLL 107. Specifically, in the first transmitter 100 and the second transmitter 110, the microcomputer 103 controls the voltage and the current of the power supplied to the PLL 107 to make the center frequency of the power supply radio wave of the first transmitter 100 different from the center frequency of the power supply radio wave of the second transmitter 110.

The first transmitter 100 or the second transmitter 110 may be configured such that the center frequency of the power supply radio wave of the first transmitter 100 is different from the center frequency of the power supply radio wave of the second transmitter 110, without receiving communication information from each other.

Specifically, it is conceivable to set the center frequencies of the power supply radio waves transmitted by the first transmitter 100 and the second transmitter 110 to be different from each other in advance. Further, by controlling the center frequencies of the power supply radio waves transmitted by the first transmitter 100 and the second transmitter 110 randomly for each predetermined period according to a predetermined time change pattern, the center frequencies of the power supply radio waves transmitted by the first transmitter 100 and the second transmitter 110 can be made different from each other without receiving the communication information from each other.

Accordingly, the complexity of a wireless power supply system is reduced, the interference between the transmitters is reduced, and the efficiency of power transmission is improved. Additionally, since communication is unnecessary, a security risk can be reduced.

### <Operations of Control Device C10>

Control of the first transmitter 100 by the control unit C104 of the control device C10 will be described.

A wireless power supply system (WPT system 1) includes the control device C10 configured to control the first transmitter 100 and the second transmitter 110, and the control device C10 is configured to control the center frequency of the power supply radio wave of the first transmitter 100 to be different from the center frequency of the power supply radio wave of the second transmitter 110.

The center frequencies of the first transmitter 100 and the second transmitter 110 are controlled such that the center frequencies of the first transmitter 100 and the second transmitter 110 are different from each other, based on at least one or more control means of a temperature control means configured to control temperatures of the first transmitter 100 and the second transmitter 110, a power supply voltage control means configured to control power supply voltages of the first transmitter 100 and the second transmitter 110, and a power supply current control means configured to control power supply currents of the first transmitter 100 and the second transmitter 110.

The control device C10 is configured to control the temperature of the component or the outside air temperature by transmitting a control signal to the microcomputer of the first transmitter 100 or the second transmitter. Accordingly, the center frequencies of the first transmitter 100 and the second transmitter 110 are controlled to be different from each other.

For example, by controlling the microcomputer 103 included in the first transmitter 100 or the second transmitter 110, the components included in the transmitter may generate heat to control the temperature. Alternatively, the temperature of the transmitter may be controlled by separately controlling a heater or the like (not shown) included in the transmitter. The temperature of the first transmitter 100 or the second transmitter 110 may be controlled by controlling an air conditioner or the like in an installation environment in which the first transmitter 100 or the second transmitter 110 is installed.

The control device C10 is configured to control the power supply voltage or the power supply current supplied to the PLL 107 by transmitting a control signal to the microcomputer of the first transmitter 100 or the second transmitter. Accordingly, the center frequencies of the first transmitter 100 and the second transmitter 110 are controlled to be different from each other. Specifically, the microcomputer 103 is configured to control the voltage and current of the power supplied to the PLL 107. Specifically, in the first transmitter 100 and the second transmitter 110, the microcomputer 103 controls the voltage and the current of the power supplied to the PLL 107 to make the center frequency of the power supply radio wave of the first transmitter 100 different from the center frequency of the power supply radio wave of the second transmitter 110.

The first transmitter 100 or the second transmitter 110 may control the center frequency of the power supply radio wave of the first transmitter 100 to be different from the center frequency of the power supply radio wave of the second transmitter 110, without receiving communication information from each other.

Specifically, it is conceivable to set the center frequencies of the power supply radio waves transmitted by the first transmitter 100 and the second transmitter 110 to be different from each other in advance. Further, by controlling the center frequencies of the power supply radio waves transmitted by the first transmitter 100 and the second transmitter 110 randomly for each predetermined period according to a predetermined time change pattern, the center frequencies of the power supply radio waves transmitted by the first transmitter 100 and the second transmitter 110 can be made different from each other without receiving the communication information from each other.

Accordingly, the interference between the transmitters is reduced, each transmitter can efficiently transmit power, and the power transmission performance of the wireless power supply system is improved.

The first transmitter 100 and the second transmitter 110 may include communication means for communicating with each other, and the first transmitter 100 or the second transmitter 110 may control the center frequency of the power supply radio wave of the first transmitter 100 to be different from the center frequency of the power supply radio wave of the second transmitter 110 based on communication information received via the communication means.

Specifically, the first transmitter 100 may acquire information on the frequency of the power supply radio wave transmitted by the second transmitter 110 by wireless or wired communication, and control the frequency of the power supply radio wave transmitted by the first transmitter 100 to be different from the frequency of the power supply radio wave transmitted by the second transmitter 110. Alternatively, the first transmitter 100 may control the frequency of the power supply radio wave transmitted by the first transmitter 100 to be different from the frequency of the power supply radio wave transmitted by the second transmitter 110 based on the information on the frequency of the power supply radio wave transmitted by the second transmitter 110, which is acquired via the control device C10.

In a case where the receiver 200 is provided in a mobile body, the control device C10 may be configured to execute power supply control according to the present disclosure when the receiver 200 enters a power supply space. Specifically, when the receiver 200 newly enters the space, the control device C10 may be configured to execute the power supply control according to the present disclosure over a predetermined period, and may be configured not to execute the power supply control according to the present disclosure after the predetermined period has elapsed. Accordingly, even when a position of the receiver 200 is not determined in the power supply space, power can be stably supplied. Additionally, the control device C10 may be configured not to execute the control according to the present disclosure as long as the power supply radio wave can be transmitted so that power can be stably supplied to the position of the receiver 200 after the predetermined period has elapsed.

The difference between the frequencies of the radio waves transmitted by the first transmitter 100 and the second transmitter 110 may vary depending on a distance between the first transmitter 100 and the second transmitter 110. For example, the frequencies of the radio waves of the first transmitter 100 and the second transmitter 110 may be controlled to be different from each other so that power can be stably supplied to the entire power supply space according to the positions in the power supply space where the first transmitter 100 and the second transmitter 110 are installed.

For example, as the distance between the first transmitter 100 and the second transmitter 110 increases, the frequencies of the power supply radio waves of the first transmitter 100 and the second transmitter 110 may be made to differ more greatly. For example, as the distance between the first transmitter 100 and the second transmitter 110 increases, the frequencies of the power supply radio waves of the first transmitter 100 and the second transmitter 110 may be made to differ slightly.

Alternatively, the difference between the frequencies of the radio waves transmitted by the first transmitter 100 and the second transmitter 110 may vary depending on an output between the first transmitter 100 and the second transmitter 110. For example, the frequencies of the radio waves of the first transmitter 100 and the second transmitter 110 may be controlled to be different from each other so that power can be stably supplied to the entire power supply space according to output values of the power supply radio waves of the first transmitter 100 and the second transmitter 110, a difference between the output values, a ratio of the output values, and the like.

For example, as the difference between the output values of the power supply radio waves of the first transmitter 100 and the second transmitter 110 increases, the frequencies of the power supply radio waves of the first transmitter 100 and the second transmitter 110 may be made to differ more greatly. For example, as the difference between the output values of the power supply radio waves of the first transmitter 100 and the second transmitter 110 decreases, the frequencies of the power supply radio waves of the first transmitter 100 and the second transmitter 110 may be made to differ slightly.

In the present disclosure, the first transmitter 100 and the second transmitter 110 have been described as transmission devices housed in independent housings as an example. The first transmitter 100 and the second transmitter 110 may be configured as antenna elements of an array antenna including a plurality of antenna elements. Specifically, a first antenna element and a second antenna element included in the plurality of antenna elements housed in one housing may be regarded as the first transmitter 100 and the second transmitter 110.

In such a case, when one receiver receives power supplied from one array antenna by radio waves, the receiver can stably receive power supplied from one array antenna regardless of a position in a space where the receiver is installed. Specifically, it is possible to prevent the occurrence of a spatial position (a dead spot) where the receiver cannot receive sufficient power to be supplied. Accordingly, one array antenna can supply power more uniformly over the entire power supply space.

### <Additional Notes>

The matters described in each of the above embodiments are additionally described below.

### (Note 1)

A wireless power supply system including a first transmitter, a second transmitter, and at least one receiver, in which the first transmitter (100) and the second transmitter (110) are configured to wirelessly supply power to the receiver (200) via power supply radio waves, a center frequency of a power supply radio wave of the first transmitter is different from a center frequency of a power supply radio wave of the second transmitter, and the power supply radio waves of the first transmitter and the second transmitter are radio waves regarded as substantially consecutive continuous waves.

When one receiver receives power supplied from a plurality of transmitters by radio waves, the receiver can stably receive power supplied from the plurality of transmitters regardless of a position in a space where the receiver is installed. Specifically, it is possible to prevent the occurrence of a spatial position (a dead spot) where the receiver cannot receive sufficient power to be supplied. Accordingly, the transmitter can supply power more uniformly over the entire power supply space.

### (Note 2)

The wireless power supply system according to Note 1, in which a frequency of the power supply radio wave of the first transmitter (100) is a radio wave that belongs to identical channel as a frequency of the power supply radio wave of the second transmitter (110).

Accordingly, in the first transmitter and the second transmitter that transmit power supply radio waves belonging to a channel in the same radio wave frequency band, it is possible to prevent the occurrence of a spatial position (a dead spot) where stable power supply cannot be performed in a power supply space while supplying sufficient power to the receiver. Accordingly, the plurality of transmitters can supply power to the receiver by the power supply radio waves in the frequency band of the same channel, and the transmitters can supply power more uniformly over the entire power supply space.

### (Note 3)

The wireless power supply system according to Note 1, in which the first transmitter (100) and the second transmitter (110) is configured to perform wireless information communication with the receiver (200) via communication radio waves, and the power supply radio waves of the first transmitter and the second transmitter are radio waves that are unmodulated, contain no modulation signals, and carry no information.

This improves power transmission efficiency. It is possible to avoid including information unnecessary for communication in the power supply radio waves.

### (Note 4)

The wireless power supply system according to Note 1, in which in a case where the center frequency of the power supply radio wave of the second transmitter is f2 [Hz], a center frequency f1 [Hz] of the power supply radio wave of the first transmitter is f2 × (1 + 1,000/1,000,000) [Hz] or less and f2 × (1 - 1,000/1,000,000) [Hz] or more.

When one receiver receives power supplied from a plurality of transmitters by radio waves, the receiver can stably receive power supplied from the plurality of transmitters regardless of a position in a space where the receiver is installed. Specifically, the occurrence of a dead spot can be particularly prevented.

### (Note 5)

The wireless power supply system according to Note 4, in which in a case where the center frequency of the power supply radio wave of the second transmitter is f2 [Hz], the center frequency f1 [Hz] of the power supply radio wave of the first transmitter is f2 × (1 + 0.001/1,000,000) [Hz] or more or f2 × (1 - 0. 001/1,000,000) [Hz] or less.

When one receiver receives power supplied from a plurality of transmitters by radio waves, the receiver can stably receive power supplied from the plurality of transmitters regardless of a position in a space where the receiver is installed.

### (Note 6)

The wireless power supply system according to Note 1, in which capacitances of capacitors connected to output terminals of the first transmitter and the second transmitter are different from each other, and the center frequency of the power supply radio wave of the first transmitter is different from the center frequency of the power supply radio wave of the second transmitter.

Accordingly, the center frequencies of the first transmitter and the second transmitter can be made different from each other. It is possible to realize a wireless power supply system capable of stably supplying power from a plurality of transmitters to one receiver regardless of a position in a space where the receiver is installed.

### (Note 7)

The wireless power supply system according to Note 1, in which the center frequencies of the first transmitter and the second transmitter are controlled such that the center frequencies of the first transmitter and the second transmitter are different from each other based on at least one or more control means of a temperature control means configured to control temperatures of the first transmitter and the second transmitter, a power supply voltage control means configured to control power supply voltages of the first transmitter and the second transmitter, and a power supply current control means configured to control power supply currents of the first transmitter and the second transmitter.

It is possible to realize a wireless power supply system capable of stably supplying power from a plurality of transmitters to one receiver regardless of a position in a space where the receiver is installed.

### (Note 8)

The wireless power supply system according to Note 1, further including a control device configured to control the first transmitter and the second transmitter, in which the control device is configured to control the center frequency of the power supply radio wave of the first transmitter to be different from the center frequency of the power supply radio wave of the second transmitter.

It is possible to realize a wireless power supply system capable of stably supplying power from a plurality of transmitters to one receiver regardless of a position in a space where the receiver is installed.

### (Note 9)

The wireless power supply system according to Note 1, in which the first transmitter and the second transmitter each include communication means for communicating with each other, and the first transmitter or the second transmitter is configured to control the center frequency of the power supply radio wave of the first transmitter to be different from the center frequency of the power supply radio wave of the second transmitter based on communication information received by the communication means.

It is possible to realize a wireless power supply system capable of stably supplying power from a plurality of transmitters to one receiver regardless of a position in a space where the receiver is installed. The interference between the transmitters is reduced, each transmitter can efficiently transmit power, and the power transmission performance of the system is improved.

### (Note 10)

The wireless power supply system according to Note 1, in which the first transmitter or the second transmitter is configured to control the center frequency of the power supply radio wave of the first transmitter to be different from the center frequency of the power supply radio wave of the second transmitter, without receiving communication information from each other.

It is possible to realize a wireless power supply system capable of stably supplying power from a plurality of transmitters to one receiver regardless of a position in a space where the receiver is installed. The complexity of the system is reduced, the interference between the transmitters is reduced, and the efficiency of power transmission is improved. Additionally, since communication is unnecessary, a security risk can be reduced.

### REFERENCE SIGNS LIST

1 WPT system
300 first information processing device
3001 storage unit
3004 control unit
3006 input device
3008 output device
400 second information processing device
4001 storage unit
4004 control unit
4006 input device
4008 output device
C10 control device
C101 storage unit
C104 control unit
C106 input device
C108 output device
100 transmitter
110 transmitter
200 receiver

## Claims

1. A wireless power supply system comprising a first transmitter, a second transmitter, and at least one receiver,
wherein the first transmitter and the second transmitter are configured to wirelessly supply power to the receiver via power supply radio waves,
a center frequency of a power supply radio wave of the first transmitter is different from a center frequency of a power supply radio wave of the second transmitter, and
the power supply radio waves of the first transmitter and the second transmitter are radio waves regarded as substantially consecutive continuous waves.

2. The wireless power supply system according to claim 1,
wherein a frequency of the power supply radio wave of the first transmitter is a radio wave that belongs to identical channel as a frequency of the power supply radio wave of the second transmitter.

3. The wireless power supply system according to claim 1,
wherein the first transmitter and the second transmitter is configured to perform wireless information communication with the receiver via communication radio waves, and
the power supply radio waves of the first transmitter and the second transmitter are radio waves that are unmodulated, contain no modulation signals, and carry no information.

4. The wireless power supply system according to claim 1,
wherein in a case where the center frequency of the power supply radio wave of the second transmitter is f2 [Hz], a center frequency f1 [Hz] of the power supply radio wave of the first transmitter is f2 × (1 + 1,000/1,000,000) [Hz] or less and f2 × (1 - 1,000/1,000,000) [Hz] or more.

5. The wireless power supply system according to claim 4,
wherein in a case where the center frequency of the power supply radio wave of the second transmitter is f2 [Hz], the center frequency fl [Hz] of the power supply radio wave of the first transmitter is f2 × (1 + 0.001/1,000,000) [Hz] or more or f2 × (1 - 0. 001/1,000,000) [Hz] or less.

6. The wireless power supply system according to claim 1,
wherein capacitances of capacitors connected to output terminals of the first transmitter and the second transmitter are different from each other, and the center frequency of the power supply radio wave of the first transmitter is different from the center frequency of the power supply radio wave of the second transmitter.

7. The wireless power supply system according to claim 1,
wherein the center frequencies of the first transmitter and the second transmitter are controlled such that the center frequencies of the first transmitter and the second transmitter are different from each other, based on at least one or more control means of:
a temperature control means configured to control temperatures of the first transmitter and the second transmitter;
a power supply voltage control means configured to control power supply voltages of the first transmitter and the second transmitter; and
a power supply current control means configured to control power supply currents of the first transmitter and the second transmitter.

8. The wireless power supply system according to claim 1, further comprising:
a control device configured to control the first transmitter and the second transmitter, wherein
the control device is configured to control the center frequency of the power supply radio wave of the first transmitter to be different from the center frequency of the power supply radio wave of the second transmitter.

9. The wireless power supply system according to claim 1,
wherein the first transmitter and the second transmitter each include communication means for communicating with each other, and
the first transmitter or the second transmitter is configured to control the center frequency of the power supply radio wave of the first transmitter to be different from the center frequency of the power supply radio wave of the second transmitter, based on communication information received by the communication means.

10. The wireless power supply system according to claim 1, wherein the first transmitter or the second transmitter is configured to control the center frequency of the power supply radio wave of the first transmitter to be different from the center frequency of the power supply radio wave of the second transmitter, without receiving communication information from each other.
